# EUROPEAN PATENT APPLICATION

(11) **EP 2 108 941 A2**
(43) Date of publication of application: **14.10.2009**
(21) Application number: 09004725.9
(22) Date of filing: 31.03.2009
(51) Int. Cl.: G01N 21/55

(54) **Surface plasmon sensor**

(30) Priority: 09.04.2008 JP 2008101855
(71) Applicant: Sharp Kabushiki Kaisha, Osaka-shi, Osaka 545-8522 (JP)
(72) Inventor: Kitazawa, Tazuko, Osaka-shi Osaka 545-8522 (JP)
(74) Representative: Müller - Hoffmann & Partner

(57) **Abstract**

A surface plasmon sensor (1) includes: a metal layer (6) on a prism (5) translucent with respect to a wavelength of a light beam (13), the metal layer (6) contacting a sample (14); and a light detector (9) for detecting the reflected light beam (13) from the metal layer (6) with respect to each of incident angles. In the surface plasmon sensor (1), the light detector (9) detects refractive index of the sample (14) by radiating the light beam (13) onto a surface of the metal layer (6) which surface is opposite to a surface where the sample (14) contacts, the metal layer (6) includes a first metal film (6a) and a second metal film (6b) positioned to be close to each other. This allows measuring refractive index in a wider range with a simple configuration and the same optical system as that of conventional arts.

## Description

This application claims priority on Patent Application No. 2008-101855 filed in Japan on April 9, 2008, the entire contents of which are hereby incorporated by reference.

### Technical Field

The present invention relates to a surface plasmon sensor for detecting, by use of surface plasmon resonance, a refractive index of a liquid or gas including an object to be detected.

### Background Art

Recently, surface plasmon sensors utilizing a surface plasmon resonance have been popularly developed. A surface plasmon sensor is intended for detecting a refractive index of a liquid or gas including an object to be detected (a liquid or gas including an object to be detected is hereinafter referred to as "sample". A liquid or gas that does not include an object to be detected is not referred to as "sample"), and the surface plasmon sensor is used widely in detection of concentration of a solution, detection of protein and macromolecules, etc. Further, the surface plasmon sensor can detect (i) an adsorption procedure of an object to be detected to an adsorption layer of a metal layer that adsorbs the object, (ii) temporal change of an adsorption reaction, etc., by surveying temporal change of a refractive index of a liquid or gas including the object.

The following specifically explains a configuration of a surface plasmon sensor, employing a conventional surface plasmon sensor for detecting concentration of an object to be detected in a liquid as an example. The surface plasmon sensor includes: a metal layer on a dielectric substrate such as quartz and glass; and an adsorption layer capable of adsorbing the object to be detected, i.e. predetermined molecules, the adsorption layer being positioned on a surface of the metal layer which surface is opposite to a surface where the dielectric substrate is provided. By casing a liquid including the molecules to contact the adsorption layer, the surface plasmon sensor causes the molecules to be adsorbed by the adsorption layer.

Then, the surface plasmon sensor detects a refractive index of the solution by radiating light beam from a light source to the surface of the metal layer which surface is opposite to the surface where the adsorption layer is provided. Further, in the similar manner as the detection of the refractive index of the solution, the surface plasmon sensor also detects a refractive index of a medium that does not include the molecules, and obtains concentration of the solution on the basis of the refractive index of the medium and the refractive index of the solution.

The surface plasmon sensor uses surface plasmon resonance in order to detect the refractive index. The surface plasmon resonance is a phenomenon that in a case where light beam is incident to a metal layer on a dielectric substrate with an appropriate polarization direction and an appropriate incident angle, when the wavenumber of the light beam that is parallel to the metal layer is identical with the wavenumber of surface plasmon, a resonance is generated. The surface plasmon is a dilatational wave in which free electrons on a metal surface vibrate in a direction parallel to the metal surface.

In the surface plasmon sensor, when the light beam is radiated to the metal layer so that the light beam is incident to the metal layer with an appropriate incident angle and an appropriate polarization, the light beam is converted into surface plasmon on the metal layer. Consequently, the reflectance of the light beam to the metal layer is reduced since a part of energy is used in conversion to the surface plasmon.

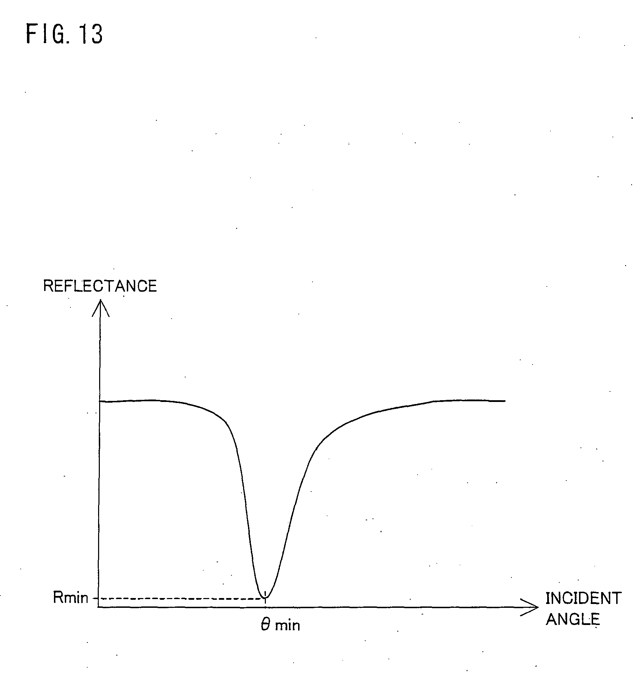

Fig. 13 is a graph showing a relation between an incident angle and a reflectance when the light beam is incident to the metal layer with an appropriate angle and an appropriate polarization in the surface plasmon sensor. As illustrated in Fig. 13, in the graph whose lateral axis indicates an incident angle and whose longitudinal axis indicates a reflectance, it is found that the reflectance drops at a certain incident angle. A part where the reflectance drops is called dip. In the following explanations, the minimum reflectance at the dip is called a reflectance Rmin and an incident angle at the dip is called an index angle θmin.

That is, the appropriate incident angle is the incident angle θmin at which most of the light beam is converted into the surface plasmon on the metal layer. The appropriate polarization direction is a polarization direction that is parallel to an incident plane including a normal line of an interface between the dielectric substrate and the metal layer and an optical axis of the light beam (p-polarization). When the light beam is in a polarization direction perpendicular to the incident plane (s-polarization), the surface plasmon resonance is not generated.

The surface plasmon sensor obtains the incident angle θmin by use of the surface plasmon resonance, and calculates the refractive index of the solution on the basis of a precalculated relation between the incident angle θmin and the refractive index of the solution.

Non-Patent Literature 1 describes that a film thickness of the metal layer and the incident angle θmin depend on a refractive index of a medium contacting the metal layer. Accordingly, the relation between the incident angle θmin and the reflectance varies according to the refractive index of the medium or the solution that contacts the metal layer. Consequently, the surface plasmon sensor can detect a change of a refractive index between a case where the medium without the molecules is caused to contact the metal layer and a case where the solution including the molecules is caused to contact the metal layer.

Then, by use of the change of a refractive index, the surface plasmon sensor can calculate concentration of the solution on the basis of the precalculated relation between the refractive index and the concentration of the solution.

In order to detect an accurate refractive index of a liquid or gas including an object to be detected, the film thickness of the metal layer of the surface plasmon sensor is generally selected so that the reflectance Rmin of light beam to a metal layer in a case where a liquid or gas without an object to be detected is caused to contact the metal layer becomes minimum. In the following explanations, a film thickness of a metal layer with the minimum reflectance Rmin is referred to as a film thickness d.

The conventional surface plasmon sensor has a problem that it is difficult to realize both a wide measurable range of a refractive index and a high resolution. In order to solve the problem, Patent Literature 1 describes that in a surface plasmon sensor including plural fibers that are provided independently, a dielectric layer called a refractive index adjustment layer is provided on a metal layer included in each of sensing sections in the respective fibers, and a material or a film thickness of the metal layer or the refractive index adjustment layer are changed in order to widen the measurable range of the refractive index. Further, in Patent Literature 1, a fiber without a sensing section is provided and fluctuations of a light source and a detector are monitored by use of intensity of light from the fiber without a sensing section.

Patent Literature 2 describes that plural diffraction lattice surfaces are provided on a surface of a metal layer, and the plural diffraction lattice surfaces have respective diffraction lattices that are composed of different groove pitches disposed in the same direction. This allows measuring different ranges of angles in individual diffraction lattice surfaces, thereby allowing measurement of comprehensively wide scopes of angles.

### Citation List

Patent Literature 1
   Japanese Patent Application Publication, Tokukai, No. 2007-263736 A (Publication Date: October 11, 2007)
Patent Literature 2
   Japanese Patent Application Publication, Tokukai, No. 2003-121350 A (Publication Date: April 23, 2003)
Non Patent Literature 1
   Surface Plasmons on smooth and rough surfaces and on gratings, Heinz Raether, Springer-Verlag, 1988 p.118-p.123

### Summary of Invention

### Technical Problem

However, the aforementioned conventional arts further have the following problems.

Since the invention disclosed in Patent Literature 1 uses plural fibers, it is necessary to make characteristics of individual fibers equal to one another. This requires radiation of light to individual fibers, connection of individual fibers with detectors, etc.

In particular, in a case of using intensity of light from a fiber without a sensing section for normalization, correction is required not only for intensity of light incident to a fiber but also for many points such as a change in temperature. Further, using plural fibers requires the same number of sections to connect light to the fibers, which results in a larger device and cost up.

In the invention disclosed in Patent Literature 2, providing diffraction lattices having different groove pitches results in higher costs. Further, when an adsorption layer is provided on a concaved and convex structure such as a diffraction lattice, it is very difficult to evenly provide the adsorption layer on an upper surface, a lower surface, and a sidewall of the diffraction lattice. Further, if the adsorption layer is unevenly provided, accuracy in measurement drops.

### Solution to Problem

An object of the present invention is to provide a surface plasmon sensor capable of measuring a refractive index in a wide range with a simple configuration.

In order to solve the foregoing problem, the surface plasmon sensor of the present invention includes: a metal layer on a dielectric substrate that is translucent with respect to a wavelength of a light beam from a light source, the metal layer contacting a liquid or gas including an object to be detected; and detection means for detecting the reflected light beam from the metal layer with respect to each of a plurality of incident angles, the surface plasmon sensor **characterized in that** the detection means detects refractive index of the liquid or gas that the metal layer contacts, by radiating the light beam from the light source onto a surface of the metal layer which surface is opposite to a surface where the liquid or gas contacts, the metal layer includes a first metal film and a second metal film that are positioned on the dielectric substrate in such a manner that the first metal film and the second metal film are close to each other, and the first metal film and the second metal film are made of different materials.

### Advantageous Effects of Invention

A relation between incident angle and reflectance in a case where the light beam is incident to the metal layer with an appropriate angle and an appropriate polarization direction in the surface plasmon sensor is shown by a graph where a lateral axis indicates the incident angle and a longitudinal axis indicates the reflectance. According to the graph, the reflectance drastically drops at a certain incident angle and becomes minimum .(see Fig. 13). The point where the reflectance drops is called dip. In the following explanation, the minimum value of the reflectance at the dip is called a reflectance Rmin and an incident angle at that time is called an incident angle θmin.

With the arrangement, the surface plasmon sensor of the present invention includes detection means for detecting the reflected light beam from the metal layer with respect to each of a plurality of incident angles. Consequently, when the light beam from the light source is radiated to the metal layer that contacts a liquid including an object to be detected or a gas including an object to be detected, reflected light is generated, and the detection means detects the reflected light. Thus, the surface plasmon sensor of the present invention can measure the incident angle θmin for individual metal layers.

That is, the surface plasmon sensor of the present invention measures reflected light from the metal layer (as explained below, in the present invention, the metal layer includes a first metal film and a second metal film).

Here, a relation between the incident angle θmin and the refractive index of the liquid including an object to be detected or the gas including an object to be detected exhibits linearity, and the position of dip corresponding to the refractive index of the liquid including an object to be detected or the gas including an object to be detected, i.e. the value of the incident angle θmin differs according to the materials of the first metal film and the second metal film. Therefore, when the metal layer includes the first metal film and the second metal film that are made of different materials and when a combination of ranges of the incident angle θmin that correspond to changes of refractive index of the liquid including an object to be detected or the gas including an object to be detected on the first metal film and the second metal film is appropriately selected, it is possible to measure refractive index in a wider range with the same optical system as that of a conventional art.

Further, the surface plasmon sensor of the present invention is capable of measuring the same range of refractive index with a narrower measurement range of the incident angle θmin, compared with a conventional art. This allows the surface plasmon sensor of the present invention to have an optical lens with small numerical aperture in the optical system, thereby increasing angle resolution at measured reflectance and downsizing the optical system.

Further, since the first metal film and the second metal film are positioned in such a manner that they are close to each other, it is possible to design that the light beam incident to the first metal film and the second metal film pass through substantially the same optical system. This allows an optical path for reflected light from the first metal film and an optical path for reflected light from the second metal film to share much of optical components in common, thereby preventing growth of an apparatus in size or cost up.

Note that the expression "the first metal film 6a and the second metal film 6b are positioned in such a manner that they are close to each other" indicates both a case where the first metal film 6a and the second metal film 6b are positioned to be close to each other without contacting each other and a case where the first metal film 6a and the second metal film 6b are aligned while contacting each other.

In the case where the first metal film and the second metal film are positioned to be close to each other without contacting each other, the distance between the first metal film and the second metal film should be such a distance that allows the light beam from the light source to be incident to both of the first metal film and the second metal film.

Further, since the first metal film and the second metal film are positioned on the dielectric substrate so as to be close to each other and the first metal film and the second metal film share much of optical components in common, it is possible to simplify a configuration of a whole apparatus including the surface plasmon sensor.

With the configuration, it is possible to provide a surface plasmon sensor capable of measuring refractive index in a wider range with a simple configuration.

For a fuller understanding of the nature and advantages of the invention, reference should be made to the ensuing detailed description taken in conjunction with the accompanying drawings.

### Brief Description of Drawings

Fig. 1

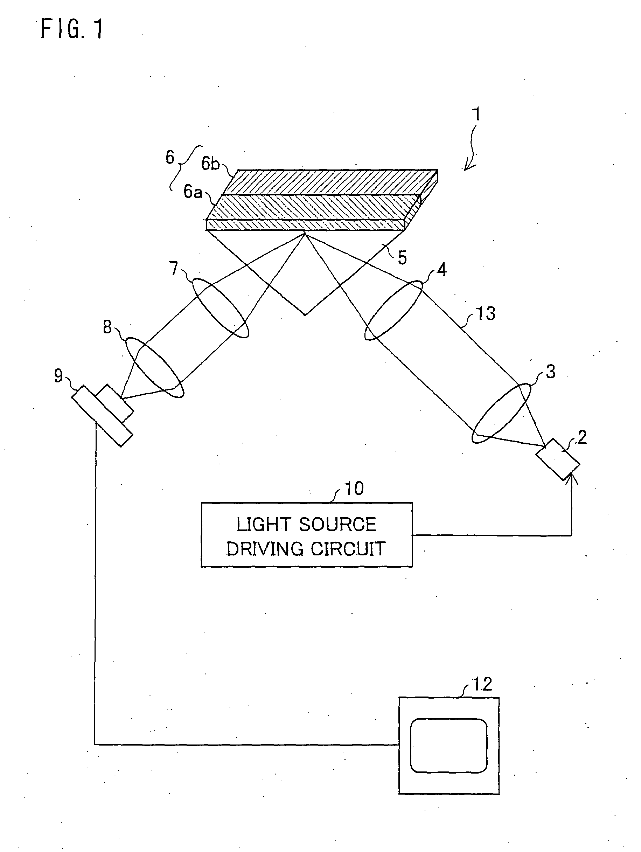

   Fig. 1 is a drawing schematically illustrating a whole structure of a surface plasmon sensor in accordance with an embodiment of the present invention.
Fig. 2

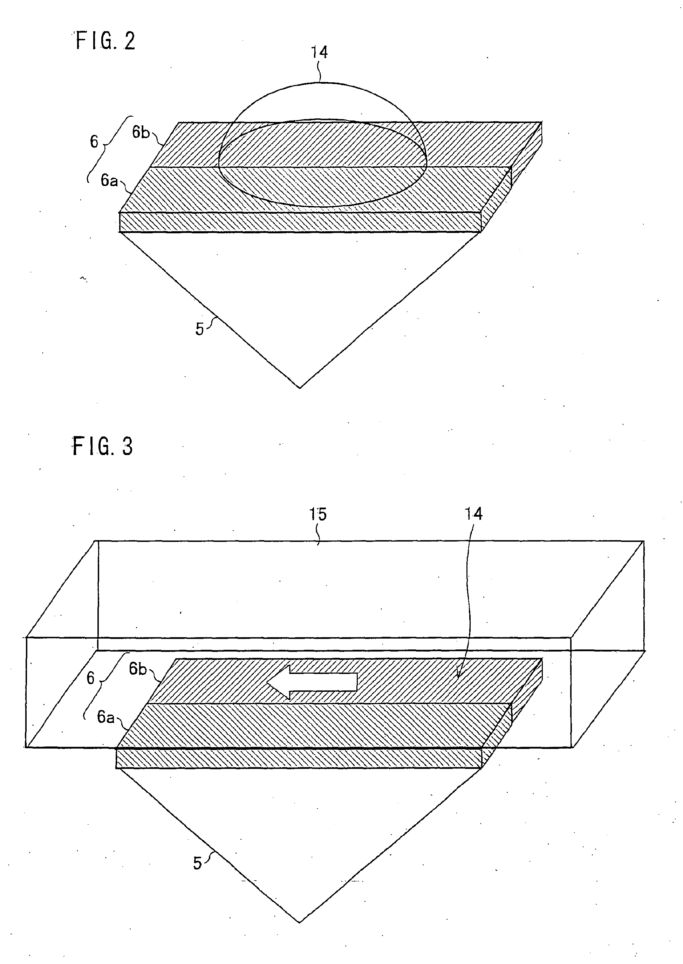

   Fig. 2 is a drawing schematically illustrating an example of how to cause a sample to contact a metal layer of the surface plasmon sensor.
Fig. 3
   Fig. 3 is a drawing schematically illustrating another example of how to cause a sample to contact a metal layer of the surface plasmon sensor.
Fig. 4

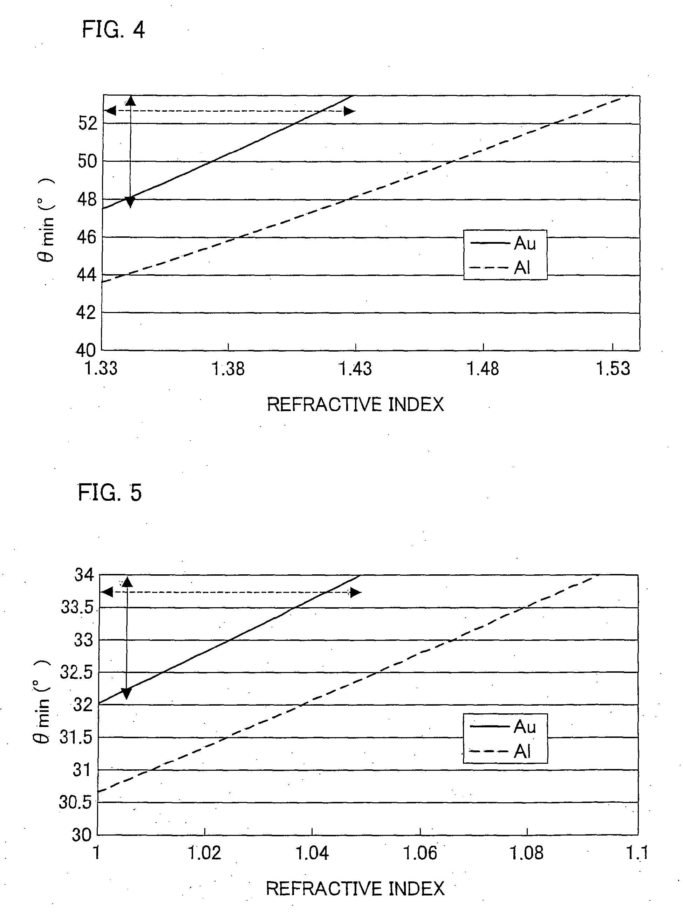

   Fig. 4 is a drawing (graph) showing a relation between refractive index of a sample and an incident angle θmin in a case where metal layers are made of Au and Al, respectively, refractive index of a prism is 2.0, refractive index of the sample is 1.33, and a wavelength of a light beam is 635nm.
Fig. 5
   Fig. 5 is a drawing (graph) showing a relation between refractive index of a sample and an incident angle θmin in a case where metal layers are made of Au and Al, respectively, refractive index of a prism is 2.0, refractive index of the sample is 1.0, and a wavelength of a light beam is 635nm.
Fig. 6

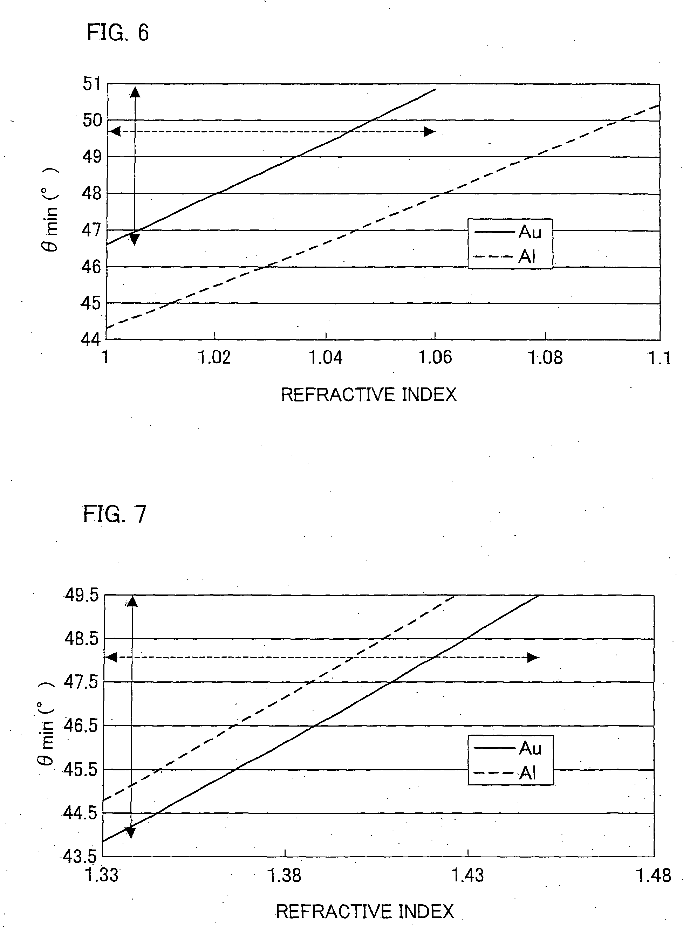

   Fig. 6 is a drawing (graph) showing a relation between refractive index of a sample and an incident angle θmin in a case where metal layers are made of Au and Al, respectively, refractive index of a prism is 1.46, refractive index of the sample is 1.0, and a wavelength of a light beam is 635nm.
Fig. 7
   Fig. 7 is a drawing (graph) showing a relation between refractive index of a sample and an incident angle θmin in a case where metal layers are made of Au and Al, respectively, refractive index of a prism is 2.0, refractive index of the sample is 1.33, and a wavelength of a light beam is 780nm.
Fig. 8

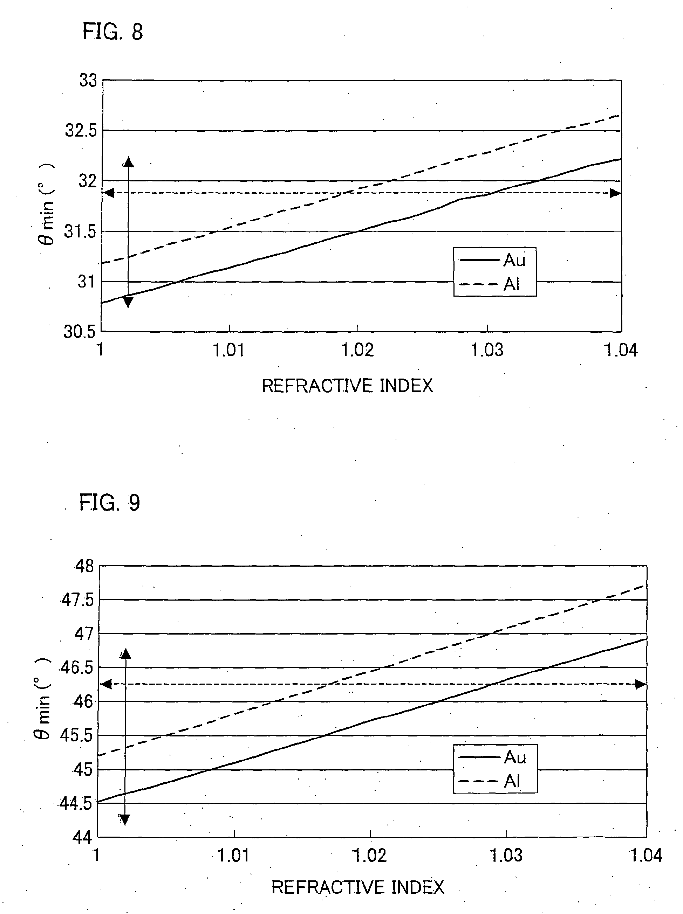

   Fig. 8 is a drawing (graph) showing a relation between refractive index of a sample and an incident angle θmin in a case where metal layers are made of Au and Al, respectively, refractive index of a prism is 2.0, refractive index of the sample is 1.0, and a wavelength of a light beam is 780nm.
Fig. 9
   Fig. 9 is a drawing (graph) showing a relation between refractive index of a sample and an incident angle θmin in a case where metal layers are made of Au and Al, respectively, refractive index of a prism is 1.46, refractive index of the sample is 1.0, and a wavelength of a light beam is 780nm.
Fig. 10

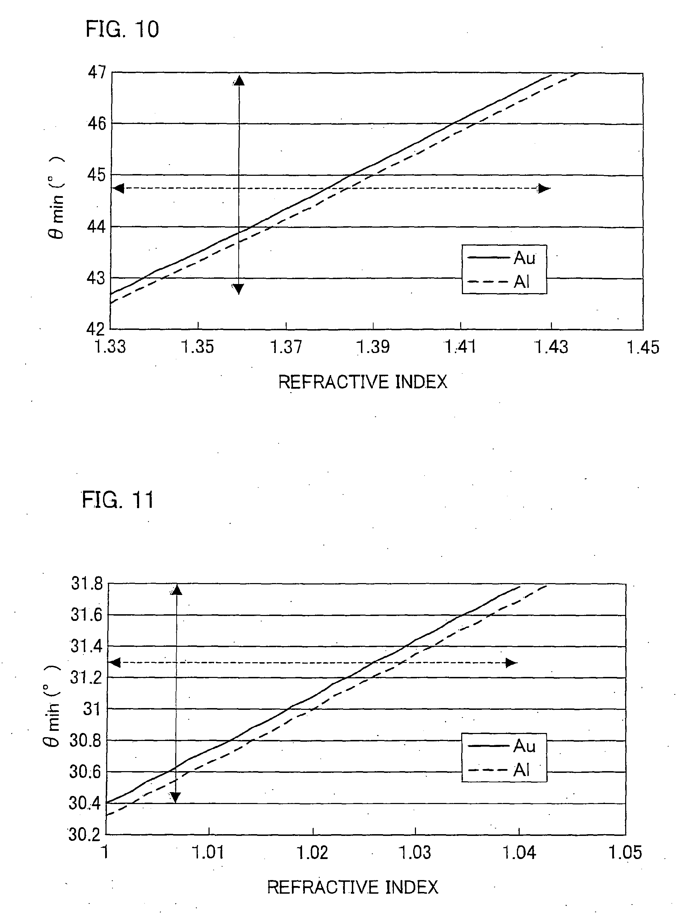

   Fig. 10 is a drawing (graph) showing a relation between refractive index of a sample and an incident angle θmin in a case where metal layers are made of Au and Al, respectively, refractive index of a prism is 2.0, refractive index of the sample is 1.33, and a wavelength of a light beam is 1054nm.
Fig. 11
   Fig. 11 is a drawing (graph) showing a relation between refractive index of a sample and an incident angle θmin in a case where metal layers are made of Au and Al, respectively, refractive index of a prism is 2.0, refractive index of the sample is 1.0, and a wavelength of a light beam is 1054nm.
Fig. 12

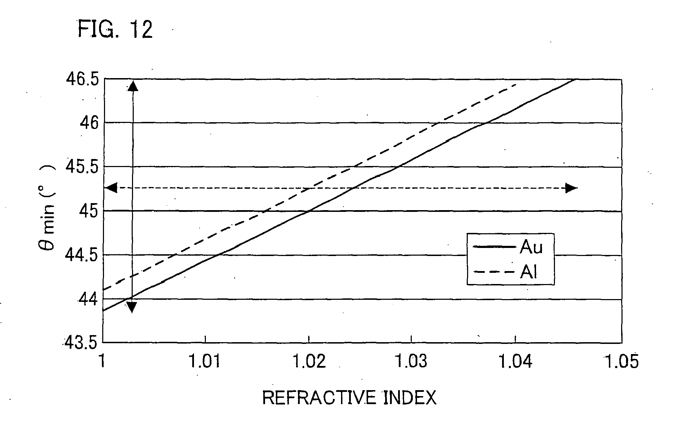

   Fig. 12 is a drawing (graph) showing a relation between refractive index of a sample and an incident angle θmin in a case where metal layers are made of Au and Al, respectively, refractive index of a prism is 1.46, refractive index of the sample is 1.0, and a wavelength of a light beam is 1054nm.
Fig. 13
   Fig. 13 is a graph showing a relation between an incident angle and reflectance when a light beam is incident to a metal layer with an appropriate angle and an appropriate polarization in a conventional surface plasmon sensor.

### Description of Embodiments

One embodiment of the present invention is described below with reference to Figs. 1 to 13.

First, with reference to Fig. 1, an explanation is made as to a whole configuration of a surface plasmon sensor 1 in accordance with an embodiment of the present invention. Fig. 1 is a drawing schematically illustrating a whole configuration of one embodiment of the surface plasmon sensor of the present invention.

As illustrated in Fig. 1, the surface plasmon sensor 1 includes a light source 2, a collimating lens 3, a focusing lens 4, a prism (dielectric substrate) 5, a metal layer 6 (this term is hereinafter used as a general term of a first metal film (metal film) 6a and a second metal film (metal film) 6b), a first lens 7, a second lens 8, a light detector 9, a light source driving circuit 10, and a monitor 12.

In addition to the above configuration, components such as an A/D conversion circuit (analog/digital conversion circuit), a D/A conversion circuit (digital/analog conversion circuit), a CPU (central processing unit) for controlling individual circuits (not shown) are required. However, these components are not closely related to the object of the present invention and therefore explanations on such circuits and CPU will be omitted below.

The surface plasmon sensor 1 of the present embodiment radiates light beam 13 from the light source 2 to a surface of the metal layer 6 which is provided on the prism (dielectric substrate) 5 and which a liquid or gas including an object to be detected contacts (for convenience of explanation, a liquid or gas including the object is called "sample", and a liquid or gas without the object is not called "sample"), in such a manner that the light beam 13 is incident to a surface of the metal layer 6 which surface is opposite to a surface where the sample contacts. Thus, the surface plasmon sensor 1 detects a refractive index of the sample.

Further, as illustrated in Fig. 1, the metal layer 6 included in the surface plasmon sensor 1 for sensing includes the first metal film 6a and the second metal film 6b that are aligned on the prism 5 in such a manner that the first metal film 6a and the second metal film 6b are close to each other or the first metal film 6a and the second metal film 6b contact each other.

Here, it is important that the first metal film 6a and the second metal film 6b are made of different (metal) materials. Consequently, the first metal film 6a and the second metal film 6b allow measuring different ranges of refractive indices. This allows the surface plasmon sensor 1 to measure a wider range of refractive index while having the same resolution as that of the conventional art. It is preferable that the metal films respectively have the most appropriate film thickness, i.e. film thickness d at which dip of the reflectance is lowest and narrowest. This will be explained later.

Further, since the first metal film 6a and the second metal film 6b are positioned in such a manner that they are close to each other, it is possible that light beams incident to the first metal film 6a and the second metal film 6b respectively pass substantially the same optical system. This allows a light path of reflected light from the first metal film 6a and a light path of reflected light from the second metal film 6b to share much of optical components in common, thereby avoiding growth of the surface plasmon sensor 1 in size or higher costs.

Note that the expression "the first metal film 6a and the second metal film 6b are positioned in such a manner that they are close to each other" indicates both a case where the first metal film 6a and the second metal film 6b are positioned to be close to each other without contacting each other and a case where the first metal film 6a and the second metal film 6b are aligned while contacting each other.

In the case where the first metal film 6a and the second metal film 6b are positioned to be close to each other without contacting each other, the distance between the first metal film 6a and the second metal film 6b should be such a distance that allows the light beam 13 from the light source 2 to be incident to both of the first metal film 6a and the second metal film 6b.

Further, since the first metal film 6a and the second metal film 6b are positioned on the prism 5 so as to be close to each other and the first metal film 6a and the second metal film 6b share much of optical components in common, it is possible to simplify a configuration of a whole apparatus including the surface plasmon sensor 1.

With the configuration, a part of a metal layer is made the first metal film 6a and another part of the metal layer is made the second metal film 6b, which avoids resulting in a larger apparatus and higher costs, compared with a conventional surface plasmon sensor.

In a case where the light detector 9 is a CCD etc., resolution depends on one pixel of the CCD, and in a case where the light detector 9 is a detector, resolution depends on a range of an angle of the light beam 13 incident to an area of the detector. For example, in a case where numerical apertures of the first lens 7 and the second lens 8 are larger and the range of an angle measured by the light detector 9 such as a CCD is wider, the range of an angle measured in each pixel is wider and angle resolution at measured reflectance is lower. On the other hand, when the range of an angle measured in each pixel is narrower, angle resolution at reflectance measured in each pixel is higher but the range of angle at reflectance measured in each pixel is narrower.

Further, in a case where dependency on incident angle is measured while the detector is moved, when the range of angle of the light beam 13 incident to the area of the detector is narrow, angle resolution at measured reflectance is higher. However, in this case, it is necessary to move the detector in a long distance, which makes the apparatus larger and makes it difficult to maintain accuracy in moving the detector.

A relation between incident angle and reflectance in a case where the light beam 13 is incident to the metal layer 6 with an appropriate angle and an appropriate polarization direction in the surface plasmon sensor is shown by a graph where a lateral axis indicates the incident angle and a longitudinal axis indicates the reflectance. According to the graph, the reflectance drastically drops at a certain incident angle and becomes minimum (see Fig. 13). The point where the reflectance drops is called dip. In the following explanation, the minimum value of the reflectance at the dip is called a reflectance Rmin and an incident angle at that time is called an incident angle θmin.

The sample 14 may be a liquid or gas including an object to be detected. A liquid or gas without an object to be detected is not referred to as a sample hereinafter.

The following details other parts of the configuration of the surface plasmon sensor.

The light source 2 emits the light beam 13, and is preferably a semiconductor laser, a light emitting diode, etc. The light beam 13 emitted from the light source 2 is incident to the metal layer 6 and excites surface plasmon on the surface of the metal layer 6.

When the light beam 13 has plural wavelengths, a condition under which surface plasmon is excited is different with respect to each wavelength. Consequently, when the light beam 13 has plural wavelengths, the reflected light beam 13 from the metal layer 6 has different incident angle dependencies, which makes analyses complicated.

Therefore, the wavelength of the light source 2 is preferably as narrow as possible, and more preferably a single wavelength. In a case of using a light source with a wide wavelength such as a light emitting diode, separation of light etc. is necessary.

Further, it is preferable that a polarization direction of the light beam 13 emitted from the light source 2 is parallel to an incident plane that is a plane including a normal line of an interface between the prism 5 and the metal layer 6 and the optical axis of the light beam 13. That is, the light beam 13 is preferably p-polarized.

When the light beam 13 is p-polarized, the light beam 13 can excite surface plasmon on the surface of the metal layer 6. When the polarization direction of the light beam 13 is perpendicular to the incident plane, that is, when the light beam 13 is s-polarized, the light beam 13 cannot excite the surface plasmon on the surface of the metal layer 6.

The collimating lens 3 converts the light beam 13 from the light source 2 into collimated light. As the focal length of the collimating lens 3 is shorter, usage efficiency of the light beam 13 emitted from the light source 2 increases.

The focusing lens 4 converges the light beam 13 from the light source 2 onto a minute region on the metal layer 6 with a certain range of incident angle at a time. When the collimating lens 3 can convert the light beam 13 from the light source 2 into collimated light, the focusing lens 4 can efficiently converge the light beam 13 onto the metal layer 6.

When the light having passed through the collimating lens 3 is diverged light or converged light, adjustment of the position of the focusing lens 4 allows the light beam 13 to be incident to the metal layer 6 with various incident angles.

The focusing lens 4 may be a lens that converges lights in all directions, such as a planoconvex lens, or may be a lens that converges light in one direction, such as a cylindrical lens. In a case where the focusing lens 4 is a lens that converges lights in all directions, the light beam 13 has complicated incident angles to the metal layer 6, but an area to which the light beam 13 is incident can be smaller. Therefore, the surface plasmon sensor 1 with a lens that converges lights in all directions allows obtaining local information of the sample 14.

In a case where the focusing lens 4 is a lens that converges light in one direction, lights in other directions maintain their original size, the incident angle of the light beam 13 to the metal layer 6 depends only on the direction in which the light is converged. Therefore, the surface plasmon sensor 1 with a lens that converges light in one direction allows easy analysis of the sample 14, but an area to which the light beam 13 is incident gets larger.

The range of the incident angle of the light beam 13 to the metal layer 6 is determined by numerical aperture of the focusing lens 4. It is necessary to determine the range so that the range includes an angle that allows surface plasmon to be excited on the metal layer 6. Further, it is preferable that the range of the incident angle of the light beam 13 to the metal layer 6 is determined to be a range that allows all the light beams 13 to be wholly reflected. In the present embodiment, the collimating lens 3 and the focusing lens 4 are designed such that light is temporally collimated and then converged. Alternatively, the collimating lens 3 and the focusing lens 4 may be replaced with a finite conjugate lens.

The prism 5 is a dielectric substrate. The prism 5 transmits the light beam 13 from the light source 2, allowing the light beam 13 to be radiated to the metal layer 6 with any incident angle, thereby exciting surface plasmon on the surface of the metal layer 6.

The material of the prism 5 is not particularly limited as long as the material transmits the light beam 13 from the light source 2 according to a wavelength of the light beam 13 and as long as the material allows exciting surface plasmon on the metal layer 6. The material is preferably glass, resin, etc. When the wavelength of the light beam 13 from the light source 2 is infrared, the material of the prism 5 may be silicon.

In order to efficiently excite surface plasmon on the surface of the metal layer 6, it is desirable that the light beam 13 is incident to the metal layer 6 with an incident angle of approximately 45 degrees. However, it is difficult to cause the light beam 13 to be incident to the metal layer 6 with an incident angle of approximately 45 degrees via a parallel substrate instead of the prism 5. Therefore, the surface plasmon sensor 1 of the present embodiment is designed such that the light beam 13 is incident to the metal layer 6 with an incident angle of approximately 45 degrees via the prism 5.

In Fig. 1, the prism 5 is a triangular prism. Alternatively, the prism with a trapezoidal shape, a wedge shape, a semi-cylindrical shape, and a semi-spherical shape also used preferably.

For example, in a case where the prism 5 is a prism with a semi-cylindrical shape or a semi-spherical shape, when the light beam 13 is incident to the center of the semi-cylinder or the semi-sphere, the incident angle of the light beam 13 to an incident surface of the prism is substantially a right angle. Therefore, reflectance at the surface drops, which increases usage efficiency of light.

In a case where the prism 5 is a prism with a triangular shape, refraction at the incident surface makes an incident angle to the prism and an incident angle to the metal layer 6 different from each other. However, the triangular prism is cheaper than the semi-cylindrical prism and is used generally. The prism 5 is not limited to the above shape and may have other shape or may be replaced with a waveguide as long as it allows the light beam 13 to be incident to the metal layer 6 at an appropriate angle.

The metal layer 6 is used to generate surface plasmon in response to the light beam 13 from the light source 2, and may be formed by sputtering or evaporation. The metal layer 6 may be directly formed on a predetermined surface of the prism 5. Alternatively, the metal layer 6 may be formed on a dielectric substrate with substantially the same refractive index as that of the prism 5 and a surface of the dielectric substrate which surface is opposite to the surface where the metal layer 6 is formed may be positioned on a predetermined surface of the prism 5 with an index matching substance therebetween.

Examples of the index matching substance include commercially available liquids, gels etc. and UV curing resin. When the dielectric substrate on which the metal layer 6 is formed is inclined, the incident angle gets erroneous. Therefore, it is necessary to use index matching substance capable of stably fixing the dielectric substrate on the prism 5. Further, an underlying layer may be provided between the dielectric substrate or the prism 5 and the metal layer 6 in order to increase adhesiveness of the metal layer 6 to the dielectric substrate or the prism 5 and to decrease surface roughness of the metal layer 6.

Further, by designing the dielectric substrate including the metal layer 6 in such a manner as to be detachable from the prism 5, it is possible to change the metal layer together with the dielectric substrate according to an object to be detected. This allows detection of many kinds of the sample 14 by use of only one apparatus. That is, it is possible to change sensitivity, a measurable range, a measurement target etc. of the surface plasmon sensor 1 by replacing the dielectric substrate including the metal layer 6 with a dielectric substrate including the metal layer 6 that is made of different material and that has different combination of film thickness.

The predetermined surface of the prism 5 indicates, in a case where the prism 5 is a triangular prism in Fig. 1, a surface including the bottom of the triangular, and in a case where the prism 5 is a semi-cylindrical or semi-spherical prism, a surface including the center of the semi-cylinder or the semi-sphere. The predetermined surface is a surface that allows the prism 5 to cause the light beam 13 to be incident to the metal layer 6 with an incident angle of approximately 45 degrees.

Further, the present invention may be arranged so that an adsorption layer for adsorbing specific molecules is provided on the surface of the metal layer 6 so as to allow detection of the specific molecules in the sample 14. In a case where the sample 14 includes not only an object to be detected but also a substance other than the object to be detected, when the surface plasmon sensor 1 detects refractive index of the sample 14, refractive index both for the object to be detected and the substance is detected. For that reason, the adsorption layer is provided on the metal layer 6 in order to adsorb only the object to be detected. This allows detecting refractive index only for the object to be detected.

The material for the metal layer 6 is not particularly limited as long as the material is a metal or an alloy capable of exciting surface plasmon. For example, the material is preferably silver, copper, aluminum, platinum, gold etc. It is desirable that the metal layer 6 is made of a stable metal free from temporal change such as oxidization.

Among the aforementioned metals, gold is a very stable metal, and has high durability since it does not rust. Further, gold excites surface plasmon very efficiently. Therefore, gold (Au) is most preferably used as the metal layer of the surface plasmon sensor 1. When gold is used as the metal layer 6, it is possible to prevent the metal layer 6 from causing chemical reaction with the sample 14, to detect refractive index with high resolution, and to prevent the metal layer 6 from being deteriorated with time due to oxidization. Gold may include impurities. However, in general, as concentration of impurities is higher, dip of reflectance is widened, which drops detection resolution. Therefore, gold preferably has high purity.

In a case where the metal layer 6 is made of gold, it is desirable to radiate the light beam 13 with a wavelength of approximately 600nm or higher to the metal layer 6 in order to excite surface plasmon on the metal layer 6. When the light beam 13 with a wavelength of approximately 600nm or higher is radiated from the light source 2 to the metal layer 6 made of gold, efficiency in exciting surface plasmon increases, allowing detection of refractive index of the sample 14 with high resolution. If the metal layer 6 is made of a material that is other than gold and that is likely to be oxidized, a protective layer made of a dielectric body may be provided on the metal layer 6 in order to prevent oxidization of the metal layer 6.

As described in Non-patent Literature 1, the film thickness d of the metal layer 6 for exciting surface plasmon is determined in accordance with four factors, that is, the materials of the prism 5, the metal layer 6, and the sample 14 (e.g. refractive indices), and the wavelength of the light source 2. The film thickness d is generally approximately several tens of nanometers.

As described above, the surface plasmon sensor 1 of the present embodiment is designed such that the metal layer 6 includes the fist metal film 6a and the second metal film 6b that are made of different materials, and is capable of detecting different ranges of refractive indices.

The first metal film 6a and the second metal film 6b are made of different materials and therefore have different film thickness d. In a case where the first metal film 6a and the second metal film 6b have the same film thickness, especially when providing an adsorption layer on the metal layer 6, it is possible to evenly provide the adsorption layer. In a case where the first metal film 6a and the second metal film 6b have different film thickness, adsorbing molecules of the adsorption layer are orientated in a skew direction or in an in-plane direction with respect to surfaces of the first metal film 6a and the second metal film 6b at the vicinity of edges. Consequently, the adsorbing molecules and molecules of a sample that are adsorbed by the adsorbing molecules get uneven, resulting in errors in detection. However, when the first metal film 6a and the second metal film 6b are caused to have the same film thickness, at least one film thickness of the first metal film 6a and the second metal film 6b differ from the film thickness d, making the size of dip larger, and making angle resolution at measured reflectance smaller. The material and film thickness for individual metal films and measurable ranges of refractive indices for individual metal films are detailed later.

In the surface plasmon sensor 1, it is preferable that the interface between the first metal film 6a and the second metal film 6b is parallel to a direction in which an incident angle of the light beam 13 varies most greatly. The first metal film 6a and the second metal film 6b may be positioned to be close to each other.

Further, as illustrated in Figs. 1 and 2, in the surface plasmon sensor 1 of the present embodiment, the first metal film 6a and the second metal film 6b are aligned on the prism 5 so as to contact each other. That is, it is preferable that both of the first metal film 6a and the second metal film 6b contact the prism 5 and contact each other.

In this case, the light beam 13 is radiated over the first metal film 6a and the second metal film 6b. When radiating the light beam 13 to the first metal film 6a and the second metal film 6b, the light beam 13 may be radiated to individual metal films in turn. However, this would require a mechanism for moving the light beam 13, and there would be a possibility that moving the light beam 13 would change the incident angle.

On the other hand, when the light beam 13 is simultaneously radiated to the first metal film 6a and the second metal film 6b, it is possible to continuously measure refractive indices in respective ranges of refractive indices. Further, since the mechanism for moving the light beam 13 is unnecessary, an apparatus does not get larger and costs do not increase. That is, a metal layer in a conventional surface plasmon sensor is arranged to be separated into the first metal film 6a and the second metal film 6b and light beam is radiated over the first metal film 6a and the second metal film 6b. This provides a surface plasmon sensor capable of measuring refractive index in a wide range, without decrease in angle resolution of measured reflectance, growth of the apparatus in size, and cost up.

Therefore, as illustrated in Figs. 1 and 2, it is preferable that the first metal film 6a and the second metal film 6b are aligned on the prism 5 so as to contact each other. The interface between the first metal film 6a and the second metal film 6b is designed to be parallel to a direction in which an incident angle of the light beam changes most greatly when carrying out plural measurements by changing the incident angle. Consequently, it is possible to cause individual metal films to have the widest measurable ranges.

The first lens 7 and the second lens 8 are provided to converge the light beam 13 that has been reflected by the interface between the prism 5 and the metal layer 6, and cause the light beam 13 thus converged to be incident to the light detector 9. The first lens 7 and the second lens 8 are designed to cause the reflected light from the interface to be collimated light and then cause the collimated light to be converted to the light detector 9. The surface plasmon sensor 1 of the present embodiment is not limited to this, and may be arranged to use a finite conjugate lens instead of the first lens 7 and the second lens 8.

The light detector 9 detects intensity of the reflected light beam 13 from the interface between the prism 5 and the metal layer 6. It is preferable that the light detector 9 is a CCD (Charge-Coupled Device), a CMOS (Complementary Metal-Oxide Semiconductor) or an arrayed detector and receives the reflected light at once. When the light detector 9 is a CCD or a CMOS in particular, it is possible to select which region is to be measured out of image regions obtained by imaging with the light beam 13.

The light source driving circuit 10 drives the light source 2 by receiving a voltage from a power source (not shown) and flowing a current to the light source 2. In order to prevent breakage of the light source 2, it is preferable that the light source driving circuit 10 is designed such that a current to be flowed to the light source 2 has an upper limit.

The monitor 12 displays various results such as measured reflectance. Preferable examples of the monitor 12 include a CRT (Cathode-Ray Tube) and a liquid crystal display.

With reference to Figs. 2 and 3, the following explains how to cause the sample 14 to contact the metal layer 6 of the surface plasmon sensor 1. In the surface plasmon sensor 1 of the present embodiment, the sample 14 is caused to contact the surface of the metal layer 6 in order to detect refractive index of the sample 14. For example, in a case where the sample 14 is a liquid, as illustrated in Fig. 2, the sample 14 in the form of a droplet is caused to contact a surface of the metal layer 6 which surface is opposite to the surface where the prism 5 is provided.

Further, in a case where the sample 14 is a liquid or gas, as illustrated in Fig. 3, the liquid or gas is caused to flow a micro flow path 15 provided on the surface of the metal layer 6 so that the liquid or gas contacts the surface of the metal layer 6. The method for causing the sample 14 to contact the surface of the metal layer 6 is not limited to this and may be any method as long as the method allows the sample 14 to contact the surface of the metal layer 6.

The following explains selection of film thickness of the first metal film 6a and the second metal film 6b and measurable ranges of refractive indices for the respective metal films, in a case where the aforementioned four components are combined.

Figs. 4 to 12 are graphs each illustrating a change of the incident angle θmin with respect to a change of refractive index of the sample 14, in a case where the first metal film 6a and the second metal film 6b are made of Au and Al, respectively, with a combination of the wavelength, the refractive index of the prism, and the refractive index of the sample 14 without an object to be detected.

Here, film thickness of individual metal films is set to be optimal with respect to individual wavelengths. From these drawings, it is found that in a case where the metal layer is made of only Au, when the range of measurement of the incident angle θmin is set to be the range specified by a full-line arrow in the drawings (graphs: Figs. 4 to 12), the measurable range of refractive index falls within the range specified by a broken-line arrow.

In contrast thereto, it is found that when an Al film is additionally used as the second metal film 6b, it is possible to measure a wider range of refractive index while the measurement range of the incident angle θmin are the same, i.e. the resolution are the same as the case where the metal layer is made of only Au.

Further, it is found that since the measurement range of the incident angle θmin can be narrowed for measuring the same range of refractive index, the focusing lens 4 and the first lens 7 each with high numerical aperture can be used, thereby increasing resolution and downsizing an optical system.

The following specifically explains the drawings (graphs: Figs. 4 to 12).

Fig. 4 is a drawing (graph) showing a relation between refractive index of the sample 14 and the incident angle θmin in a case where the wavelength of the light source 2 is 635nm, refractive index of the prism 5 is 2.0, and refractive index of the sample 14 without an object to be detected is 1.33.

It is found from the graph that when an optical system capable of measuring refractive index of the sample 14 from 1.33 to 1.43 only with the first metal film 6a (Au) is arranged to be provided with the second metal film 6b (Al), it is possible to widen the measurable range of refractive index to approximately 1.53 while maintaining the measurement range of the incident angle θmin from 47.5 degrees to 53.5 degrees.

On the other hand, in a case where it is unnecessary to widen the measurable range of the refractive index, the refractive index is measured from 1.33 to 1.4 with Au and from 1.4 to 1.43 with Al. This allows increasing resolution and downsizing an optical system.

Fig. 5 is a drawing (graph) showing a relation between refractive index of the sample 14 and the incident angle θmin in a case where the wavelength of the light source 2 is 635nm, refractive index of the prism 5 is 2.0, and refractive index of the sample 14 without an object to be detected is 1.0. It is found from the graph that when an optical system capable of measuring refractive index of the sample 14 from 1.0 to 1.05 only with the first metal film 6a (Au) is arranged to be provided with the second metal film 6b (Al), it is possible to widen the measurable range of refractive index to approximately 1.09 while maintaining the measurement range of the incident angle θmin from 32 degrees to 34 degrees. On the other hand, in a case where it is unnecessary to widen the measurable range of the refractive index, the refractive index is measured from 1.0 to 1.04 with Au and from 1.04 to 1.05 with Al. This allows increasing resolution and downsizing an optical system.

Fig. 6 is a drawing (graph) showing a relation between refractive index of the sample 14 and the incident angle θmin in a case where the wavelength of the light source 2 is 635nm, refractive index of the prism 5 is 1.46, and refractive index of the sample 14 without an object to be detected is 1.0. It is found from the graph that when an optical system capable of measuring refractive index of the sample 14 from 1.0 to 1.06 only with the first metal film 6a (Au) is arranged to be provided with the second metal film 6b (Al), it is possible to widen the measurable range of refractive index to approximately 1.1 while maintaining the measurement range of the incident angle θmin from 46.5 degrees to 51 degrees. On the other hand, in a case where it is unnecessary to widen the measurable range of the refractive index, the refractive index is measured from 1.0 to 1.045 with Au and from 1.045 to 1.06 with Al. This allows increasing resolution and downsizing an optical system.

Fig. 7 is a drawing (graph) showing a relation between refractive index of the sample 14 and the incident angle θmin in a case where the wavelength of the light source 2 is 780nm, refractive index of the prism 5 is 2.0, and refractive index of the sample 14 without an object to be detected is 1.33. It is found from the graph that in a case of using only the first metal film 6a (Au), measurement of refractive index from 1.33 to 1.43 for example requires measurement of the incident angle θmin from 43.8 degrees to 48.5 degrees, whereas in a case of using both the first metal film 6a (Au) and the second metal film 6b (Al), measurement of refractive index from 1.33 to 1.43 requires measurement of the incident angle θmin only from 44.8 degrees to 48.5 degrees, which allows downsizing an optical system.

Fig. 8 is a drawing (graph) showing a relation between refractive index of the sample 14 and the incident angle θmin in a case where the wavelength of the light source 2 is 780nm, refractive index of the prism 5 is 2.0, and refractive index of the sample 14 without an object to be detected is 1.0. It is found from the graph that in a case of using only the first metal film 6a (Au), measurement of refractive index from 1.0 to 1.04 for example requires measurement of the incident angle θmin from 30.8 degrees to 32.2 degrees, whereas in a case of using both the first metal film 6a (Au) and the second metal film 6b (Al), measurement of refractive index from 1.0 to 1.04 requires measurement of the incident angle θmin only from 31.2 degrees to 32.2 degrees, which allows downsizing an optical system.

Fig. 9 is a drawing (graph) showing a relation between refractive index of the sample 14 and the incident angle θmin in a case where the wavelength of the light source 2 is 780nm, refractive index of the prism 5 is 1.46, and refractive index of the sample 14 without an object to be detected is 1.0. It is found from the graph that in a case of using only the first metal film 6a (Au), measurement of refractive index from 1.0 to 1.04 for example requires measurement of the incident angle θmin from 44.5 degrees to 46.9 degrees, whereas in a case of using both the first metal film 6a (Au) and the second metal film 6b (Al), measurement of refractive index from 1.0 to 1.04 requires measurement of the incident angle θmin only from 45.2 degrees to 46.9 degrees, which allows downsizing an optical system.

Fig. 10 is a drawing (graph) showing a relation between refractive index of the sample 14 and the incident angle θmin in a case where the wavelength of the light source 2 is 1054nm, refractive index of the prism 5 is 2.0, and refractive index of the sample 14 without an object to be detected is 1.33. It is found from the graph that when an optical system capable of measuring refractive index of the sample 14 from 1.33 to 1.43 only with the first metal film 6a (Au) is arranged to be provided with the second metal film 6b (Al), it is possible to widen the measurable range of the refractive index to approximately 1.435 while maintaining the measurement range of the incident angle θmin from 42.7 degrees to 47 degrees. On the other hand, in a case where it is unnecessary to widen the measurable range of the refractive index, the refractive index is measured from 1.33 to 1.38 with Au and from 1.38 to 1.43 with Al for example. This allows increasing resolution and downsizing an optical system.

Fig. 11 is a drawing (graph) showing a relation between refractive index of the sample 14 and the incident angle θmin in a case where the wavelength of the light source 2 is 1054nm, refractive index of the prism 5 is 2.0, and refractive index of the sample 14 without an object to be detected is 1.0. It is found from the graph that when an optical system capable of measuring refractive index of the sample 14 from 1.0 to 1.04 only with the first metal film 6a (Au) is arranged to be provided with the second metal film 6b (Al), it is possible to widen the measurable range of refractive index to approximately 1.044 while maintaining the measurement range of the incident angle θmin from 30.4 degrees to 31.8 degrees. On the other hand, in a case where it is unnecessary to widen the measurable range of the refractive index, the refractive index is measured from 1.0 to 1.02 with Au and from 1.02 to 1.04 with Al for example. This allows increasing resolution and downsizing an optical system.

Fig. 12 is a drawing (graph) showing a relation between refractive index of the sample 14 and the incident angle θmin in a case where the wavelength of the light source 2 is 1054nm, refractive index of the prism 5 is 1.46, and refractive index of the sample 14 without an object to be detected is 1.0. It is found from the graph that in a case of using only the first metal film 6a (Au), measurement of refractive index from 1.0 to 1.04 for example requires measurement of the incident angle θmin from 43.9 degrees to 46.2 degrees, whereas in a case of using both the first metal film 6a (Au) and the second metal film 6b (Al), measurement of refractive index from 1.0 to 1.04 requires measurement of the incident angle θmin only from 44.1 degrees to 46.2 degrees, which allows downsizing an optical system.

In the present embodiment, the first metal film 6a is Au with little deterioration and the second metal film 6b is Al whose refractive index is greatly different from that of Au. However, a combination of the materials for the first metal film 6a and the second metal film 6b is not limited to this, and other combination may be employed.

Further, the first metal film 6a and the second metal film 6b may have the same film thickness in order that edges do not exist. However, in this case, one of the thickness of the first metal film 6a and the second film 6b differs from the optimal film thickness, which widens the size of dip and reduces resolution.

The surface plasmon sensor 1 may be arranged to be provided with three or more metal films in order to further increase the effect. Further, the surface plasmon sensor 1 may be arranged such that two metal films are aligned with a dielectric film that does not excite surface plasmon.

Consequently, by use of reflected light from the dielectric film without loss of the reflected light due to excitation of surface plasmon, it is possible to normalize intensities of two reflected lights from the two metal films, respectively. Thus, it is possible to remove, from the result of detection of the reflected lights resulting from radiation of the same light beam 13 to the two metal films and the dielectric film, the influence of Gaussian distribution that is intensity distribution of light of the light source 2 itself and the influence of uneven intensity distribution due to dirt etc. attaching to an optical component such as a lens and a prism.

As explained above, the surface plasmon sensor 1 includes: the metal layer 6 on the prism 5 that is translucent with respect to the wavelength of the light beam 13 from the light source 2, the metal layer 6 contacting a liquid or gas including an object to be detected; and the light detector 9 for detecting the reflected light beam 13 from the metal layer 6 with respect to each of a plurality of incident angles, refractive index of the liquid or gas being detected by radiating the light beam 13 from the light source 2 onto a surface of the metal layer 6 which surface is opposite to a surface where the liquid or gas contacts, the surface plasmon sensor 1 **characterized in that** the metal layer 6 includes the first metal film 6a and the second metal film 6b that are made of different materials, the first metal film 6a and the second metal film 6b are positioned on the prism 5 in such a manner that the first metal film 6a and the second metal film 6b are close to each other, and the second metal film 6b is a film that excites surface plasmon at the wavelength of the light beam 13, and the reflected light from the second metal film 6b is also measured.

Here, as described above (see Figs. 4 to 12), a relation between the incident angle θmin and the refractive index of the liquid including an object to be detected or the gas including an object to be detected exhibits linearity, and the range of the incident angle θmin corresponding to a change in refractive index of the liquid or gas differs according to the materials of the first metal film 6a and the second metal film 6b.

Therefore, when the second metal film 6b is made of a material different from that of the first metal film 6a and excites surface plasmon at the wavelength of the light beam 13 and when a combination of ranges of the incident angle θmin that correspond to changes of refractive index of the liquid including an object to be detected or the gas including an object to be detected on the first metal film 6a and the second metal film 6b is appropriately selected, it is possible to measure refractive index in a wider range with the same optical system as that of a conventional art.

Further, the surface plasmon sensor of the present invention is capable of measuring the same range of refractive index with a narrower measurement range of the incident angle θmin, compared with a conventional art. This allows the surface plasmon sensor of the present invention to have the focusing lens 4 and the first lens 7 each with small numerical aperture in the optical system, thereby increasing angle resolution at measured reflectance and downsizing the optical system.

Further, it is preferable to arrange the surface plasmon sensor of the present invention so that a film thickness of the first metal film 6a is a film thickness d that minimizes a minimum value of a reflectance of the light beam with respect to the first metal film 6a, when the first metal film 6a contacts a liquid or gas without the object to be detected.

Further, it is preferable to arrange the surface plasmon sensor of the present invention so that a film thickness of the second metal film 6b is a film thickness d that minimizes a minimum value of a reflectance of the light beam with respect to the second metal film 6b, when the second metal film 6b contacts a liquid or gas without the object to be detected.

With the arrangement, when the film thickness of the first metal film 6a (or second metal film 6b) is the film thickness d, the minimum reflectance Rmin of reflectance of the light beam with respect to the first metal film 6a (or second metal film 6b) becomes minimum, and the incident angle θmin of the light beam with respect to the first metal film 6a (or second metal film 6b) at the reflectance Rmin becomes minimum. Therefore, when measuring intensity of reflected light from the first metal film 6a (or second metal film 6b), it is possible to increase S / N at the time of detecting the incident angle θmin. This allows increasing sensitivity for measurement.

Further, it is preferable to arrange the surface plasmon sensor of the present invention so that the film thickness of the second metal film 6b is equal to the film thickness of the first metal film 6a.

Assume that the first metal film 6a and the second metal film 6b have different film thickness. In this case, when an adsorption layer is provided on the first metal film 6a and the second metal film 6b, there is a problem that molecules of the adsorption layer are in a skew direction at uneven edges between the metal films, preventing a sample from being evenly adsorbed by the metal films. Further, even when the adsorption layer is not provided, there is a problem that the sample does not evenly contact the first metal film 6a and the second metal film 6b.

With the arrangement, these problems are solved by making the first metal film 6a and the second metal film 6b have the same film thickness, although the film thickness of one of the first metal film 6a and the second metal film 6b differs from the ideal film thickness d. Thus, the sample contacts the two metal films evenly or is adsorbed by the two metal films evenly. Consequently, when the light beam is radiated over the first metal film 6a and the second metal film 6b, it is possible to detect refractive index with little errors.

In reality, when preparing the first metal film 6a and the second metal film 6b, it is difficult to make the first metal film 6a and the second metal film 6b have a film thickness that is exactly the same as an expected thickness, or to make the first metal film 6a and the second metal film 6b entirely free from unevenness in their thickness. A film forming apparatus at present is capable of controlling film thickness with an error margin of approximately ± 5% of the film thickness, although the error margin depends on the size of a region. Therefore, it is preferable that a difference in film thickness between the first metal film 6a and the second metal film 6b is 5% or less of one of the film thickness of the first metal film 6a and the second metal film 6b.

Further, it is preferable to arrange the surface plasmon sensor 1 of the present invention so that the first metal film 6a and the second metal film 6b are positioned on the prism 5 in such a manner that the first metal film 6a and the second metal film 6b are aligned while contacting each other, and the light beam 13 is radiated over the first metal film 6a and the second metal film 6b.

When radiating the light beam 13 to the first metal film 6a and the second metal film 6b, the light beam 13 may be radiated to individual metal films in turn. However, this would require a mechanism for moving the light beam 13, and there would be a possibility that moving the light beam 13 would change the incident angle.

On the other hand, with the above arrangement, the first metal film 6a and the second metal film 6b are positioned on the prism 5 in such a manner that they are aligned while contacting each other, and the light beam 13 is radiated over the first metal film 6a and the second metal film 6b. Consequently, reflected light from the first metal film 6a and reflected light from the second metal film 6b are derived from the light beam that passes through the common optical system. This prevents growth of the surface plasmon sensor 1 in size and cost up.

Further, since the optical system for detection by the first metal film 6a and the optical system for detection by the second metal film 6b are common, adjustment of the optical system is required only once.

Further, since the light beam 13 is radiated over the first metal film 6a and the second metal film 6b, it is unnecessary to provide a mechanism for moving the light beam 13, thereby reducing a time required for measurement.

Further, it is preferable to arrange the surface plasmon sensor 1 of the present invention so that an interface between the first metal film 6a and the second metal film 6b is parallel to a direction in which an incident angle of the light beam 13 changes most greatly.

With the arrangement, the interface between the first metal film 6a and the second metal film 6b is parallel to a direction in which an incident angle of the light beam 13 changes most greatly. Consequently, when radiating the light beam over the first metal film 6a and the second metal film 6b while changing an incident angle of the light beam 13 to measure a plurality of refractive indices, it is possible to widen measurable ranges of refractive indices both for the first metal film 6a and the second metal film 6b.

Further, it is preferable to arrange the surface plasmon sensor 1 of the present invention so that one of the first metal film 6a and the second metal film 6b is mainly made of gold.

Since a liquid including an object to be detected or a gas including an object to be detected is directly contacted by the first metal film 6a and the second metal film 6b, it is desirable that the first metal film 6a and the second metal film 6b are made of a stable metal that does not chemically react with the liquid or the gas.

In this respect, gold is a very stable metal and has high durability since it does not rust. Further, gold excites surface plasmon very efficiently.

Consequently, when the first metal film 6a (or the second metal film 6b) of the surface plasmon sensor 1 is made of gold, the first metal film 6a (or the second metal film 6b) does not chemically react with the liquid including the object to be detected or the gas including the object to be detected. This allows detecting refractive index of the liquid or the gas with high resolution, and preventing temporal deterioration of the first metal film 6a (or the second metal film 6b) due to oxidization.

Gold used here may include impurities. However, in general, when concentration of impurities is higher, dip of reflectance is wider, resulting in lower resolution for detection. For this reason, gold used here preferably has high purity.

Further, it is preferable to arrange the surface plasmon sensor 1 so that the wavelength of the light beam 13 from the light source 2 is not less than approximately 600nm and not more than approximately 1550nm.

In order to excite surface plasmon on the first metal film 6a (or the second metal film 6b), the wavelength of the light beam 13 from the light source 2 is important. As described above, it is most desirable that the first metal film 6a (or the second metal film 6b) is made of gold. In order to excite surface plasmon on the first metal film 6a (or the second metal film 6b) made of gold, it is desirable to radiate light beam of approximately 600 to 1550nm in wavelength to the first metal film 6a (or the second metal film 6b).

When light beam 13 of approximately 600 to 1550nm in wavelength is radiated to the first metal film 6a (or the second metal film 6b) made of gold, surface plasmon is excited with high efficiency. This allows detecting refractive index of the liquid including the object to be detected or the gas including the object to be detected with high resolution.

Further, it is preferable to arrange the surface plasmon sensor 1 so that a film thickness of the first metal film 6a is a film thickness d that minimizes a minimum value of a reflectance of the light beam 13 with respect to the first metal film 6a, when the first metal film 6a contacts a liquid or gas without the object to be detected.

Further, it is preferable to arrange the surface plasmon sensor 1 so that a film thickness of the second metal film 6b is a film thickness d that minimizes a minimum value of a reflectance of the light beam 13 with respect to the second metal film 6b, when the second metal film 6b contacts a liquid or gas without the object to be detected.

Thus, when the film thickness of the first metal film 6a (or the second metal film 6b) is the film thickness d, the minimum reflectance Rmin of reflectance of the light beam 13 with respect to the first metal film 6a (or the second metal film 6b) becomes minimum, and the incident angle θmin of the light beam 13 with respect to the first metal film 6a (or the second metal film 6b) at the reflectance Rmin becomes minimum. Therefore, when measuring intensity of reflected light from the first metal film 6a (or the second metal film 6b), it is possible to increase S/N at the time of detecting the incident angle θmin. This allows increasing sensitivity for measurement.

Further, it is preferable to arrange the surface plasmon sensor 1 so that the prism 5 is detachable from the surface plasmon sensor 1.

Thus, it is possible to replace the first metal film 6a (or the second metal film 6b) together with the prism 5 according to the object to be detected. This allows the single surface plasmon sensor 1 to detect various objects to be detected. That is, by replacing the prism 5 including the first metal film 6a (or the second metal film 6b) made of a certain material and having a certain film thickness with the prism 5 including the first metal film 6a (or the second metal film 6b) made of other material and having other film thickness, it is possible to appropriately change sensitivity, measurable range, and measurable target of the surface plasmon sensor 1.

As described above, the surface plasmon sensor 1 capable of refractive index in a wide range and/or capable of downsizing the optical system has been explained.

As described above, the surface plasmon sensor of the present invention includes: a metal layer on a dielectric substrate that is translucent with respect to a wavelength of a light beam from a light source, the metal layer contacting a liquid or gas including an object to be detected; and detection means for detecting the reflected light beam from the metal layer with respect to each of a plurality of incident angles, the surface plasmon sensor **characterized in that** the detection means detects refractive index of the liquid or gas that the metal layer contacts, by radiating the light beam from the light source onto a surface of the metal layer which surface is opposite to a surface where the liquid or gas contacts, the metal layer includes a first metal film and a second metal film that are positioned on the dielectric substrate in such a manner that the first metal film and the second metal film are close to each other, and the first metal film and the second metal film are made of different materials.

A relation between incident angle and reflectance in a case where the light beam is incident to the metal layer with an appropriate angle and an appropriate polarization direction in the surface plasmon sensor is shown by a graph where a lateral axis indicates the incident angle and a longitudinal axis indicates the reflectance. According to the graph, the reflectance drastically drops at a certain incident angle and becomes minimum (see Fig. 13). The point where the reflectance drops is called dip. In the following explanation, the minimum value of the reflectance at the dip is called a reflectance Rmin and an incident angle at that time is called an incident angle θmin.

With the arrangement, the surface plasmon sensor of the present invention includes detection means for detecting the reflected light beam from the metal layer with respect to each of a plurality of incident angles. Consequently, when the light beam from the light source is radiated to the metal layer that contacts a liquid including an object to be detected or a gas including an object to be detected, reflected light is generated, and the detection means detects the reflected light. Thus, the surface plasmon sensor of the present invention can measure the incident angle θmin for individual metal films.

That is, the surface plasmon sensor of the present invention measures reflected light from the metal layer (as explained below, in the present invention, the metal layer includes the first metal film and the second metal film).

Here, a relation between the incident angle θmin and the refractive index of the liquid including an object to be detected or the gas including an object to be detected exhibits linearity, and the position of dip corresponding to the refractive index of the liquid including an object to be detected or the gas including an object to be detected, i.e. the value of the incident angle θmin differs according to the materials of the first metal film and the second metal film. Therefore, when the metal layer includes the first metal film and the second metal film that are made of different materials and when a combination of ranges of the incident angle θmin that correspond to changes of refractive index of the liquid including an object to be detected or the gas including an object to be detected on the first metal film and the second metal film is appropriately selected, it is possible to measure refractive index in a wider range with the same optical system as that of a conventional art.

Further, the surface plasmon sensor of the present invention is capable of measuring the same range of refractive index with a narrower measurement range of the incident angle θmin, compared with a conventional art. This allows the surface plasmon sensor of the present invention to have an optical lens with small numerical aperture in the optical system, thereby increasing angle resolution at measured reflectance and downsizing the optical system.

Further, since the first metal film and the second metal film are positioned in such a manner that they are close to each other, it is possible to design that the light beam incident to the first metal film and the second metal film pass through substantially the same optical system. This allows an optical path for reflected light from the first metal film and an optical path for reflected light from the second metal film to share much of optical components in common, thereby preventing growth of an apparatus in size or cost up.

Note that the expression "the first metal film 6a and the second metal film 6b are positioned in such a manner that they are close to each other" indicates both a case where the first metal film 6a and the second metal film 6b are positioned to be close to each other without contacting each other and a case where the first metal film 6a and the second metal film 6b are aligned while contacting each other.

In the case where the first metal film and the second metal film are positioned to be close to each other without contacting each other, the distance between the first metal film and the second metal film should be such a distance that allows the light beam from the light source to be incident to both of the first metal film and the second metal film.

Further, since the first metal film and the second metal film are positioned on the dielectric substrate so as to be close to each other and the first metal film and the second metal film share much of optical components in common, it is possible to simplify a configuration of a whole apparatus including the surface plasmon sensor.

With the configuration, it is possible to provide a surface plasmon sensor capable of measuring refractive index in a wider range with a simple configuration.

Further, it is preferable to arrange the surface plasmon sensor of the present invention so that the first metal film and the second metal film are positioned on the dielectric substrate in such a manner that the first metal film and the second metal film are aligned while contacting each other, and the light beam is radiated over the first metal film and the second metal film.

When radiating the light beam 13 to the first metal film and the second metal film, the light beam may be radiated to individual metal films in turn. However, this would require a mechanism for moving the light beam, and there would be a possibility that moving the light beam would change the incident angle.

On the other hand, with the above arrangement, the first metal film and the second metal film are positioned on the dielectric substrate in such a manner that they are aligned while contacting each other, and the light beam is radiated over the first metal film and the second metal film. Consequently, reflected light from the first metal film and reflected light from the second metal film are derived from the common light beam. This allows an optical system for the first metal film and an optical system for the second metal film to be common, thereby preventing growth of the apparatus in size and cost up.

Further, since the optical system for the first metal film and the optical system for the second metal film are common, adjustment of the optical system is required only once.

Further, since the light beam is radiated over the first metal film and the second metal film, it is unnecessary to provide a mechanism for moving the light beam, thereby reducing a time required for measurement.

Further, it is preferable to arrange the surface plasmon sensor of the present invention so that an interface between the first metal film and the second metal film is parallel to a direction in which an incident angle of the light beam changes most greatly.

With the arrangement, the interface between the first metal film and the second metal film is parallel to a direction in which an incident angle of the light beam changes most greatly. Consequently, when radiating the light beam over the first metal film and the second metal film while changing an incident angle of the light beam to measure a plurality of refractive indices, it is possible to widen measurable ranges of refractive indices both for the first metal film and the second metal film.

Further, it is preferable to arrange the surface plasmon sensor of the present invention so that one of the first metal film and the second metal film is mainly made of gold.

Since a liquid including an object to be detected or a gas including an object to be detected is directly contacted by the first and second metal films, it is desirable that the first and second metal films are made of a stable metal that does not chemically react with the liquid or the gas.

In this respect, gold is a very stable metal and has high durability since it does not rust. Further, gold excites surface plasmon very efficiently.

Consequently, when one of the first and second metal films of the surface plasmon sensor of the present invention is made of gold, the one of the first and second metal films does not chemically react with the liquid including the object to be detected or the gas including the object to be detected. This allows detecting refractive index of the liquid or the gas with high resolution, and preventing temporal deterioration of one of the first and second metal films due to oxidization.

Gold used here may include impurities. However, in general, when concentration of impurities is higher, dip of reflectance is wider, resulting in lower resolution for detection. For this reason, gold used here preferably has high purity.

Further, it is preferable to arrange the surface plasmon sensor of the present invention so that the wavelength of the light beam from the light source is not less than 600nm and not more than 1550nm.
in order to excite surface plasmon on the first metal film (or the second metal film), the wavelength of the light beam from the light source is important. As described above, it is most desirable that the first metal film (or second metal film) is made of gold. In order to excite surface plasmon on the first metal film (or second metal film) made of gold, it is desirable to radiate light beam of 600 to 1550nm in wavelength to the first metal film (or second metal film).

When light beam of 600 to 1550nm in wavelength is radiated to the first metal film (or second metal film) made of gold, surface plasmon is excited with high efficiency. This allows detecting refractive index of the liquid including the object to be detected or the gas including the object to be detected with high resolution.

Further, it is preferable to arrange the surface plasmon sensor of the present invention so that a film thickness of the first metal film is a film thickness d that minimizes a minimum value of a reflectance of the light beam with respect to the first metal film, when the first metal film contacts a liquid or gas obtained by excluding the object to be detected from the liquid or gas.

Further, it is preferable to arrange the surface plasmon sensor of the present invention so that a film thickness of the second metal film is a film thickness d that minimizes a minimum value of a reflectance of the light beam with respect to the second metal film, when the second metal film contacts a liquid or gas obtained by excluding the object to be detected from the liquid or gas.

With the arrangement, when the film thickness of the first metal film (second metal film) is the film thickness d, the minimum reflectance Rmin of reflectance of the light beam with respect to the first metal film (second metal film) becomes minimum, and the incident angle θmin of the light beam with respect to the first metal film (second metal film) at the reflectance Rmin becomes minimum. Therefore, when measuring intensity of reflected light from the first metal film (or second metal film), it is possible to increase S/N at the time of detecting the incident angle θmin. This allows increasing sensitivity for measurement.

Further, it is preferable to arrange the surface plasmon sensor of the present invention so that the film thickness of the second metal film is equal to the film thickness of the first metal film.

Assume that the first metal film and second metal film have different film thickness. In this case, when an adsorption layer is provided on the first metal film and the second metal film, there is a problem that molecules of the adsorption layer are in a skew direction at uneven edges between the metal films, preventing a sample from being evenly adsorbed by the metal films. Further, even when the adsorption layer is not provided, there is a problem that the sample does not evenly contact the first metal film and the second metal film.

With the arrangement, these problems are solved by making the first metal film and the second metal film have the same film thickness, although the film thickness of one of the first metal film and the second metal film differs from the ideal film thickness d. Thus, the sample contacts the two metal films evenly or is adsorbed by the two metal films evenly. Consequently, when the light beam is radiated over the first metal film and the second metal film, it is possible to detect refractive index with little errors.

In reality, when preparing the first and second metal films, it is difficult to make the first and second metal films have a film thickness that is exactly the same as an expected thickness, or to make the first and second metal films entirely free from unevenness in their thickness. A film forming apparatus at present is capable of controlling film thickness with an error margin of approximately ± 5% of the film thickness, although the error margin depends on the size of a region. Therefore, it is preferable that a difference in film thickness between the first metal film and the second metal film is 5% or less of one of the film thickness of the first and second metal films.

Further, it is preferable to arrange the surface plasmon sensor of the present invention so that the dielectric substrate is detachable from the surface plasmon sensor.

With the arrangement, it is possible to replace the first metal film (or second metal film) together with the dielectric substrate according to the object to be detected. This allows the single surface plasmon sensor to detect various objects to be detected. That is, by replacing a dielectric substrate including the first metal film (or second metal film) made of a certain material and having a certain film thickness with a dielectric substrate including the first metal film (or second metal film) made of other material and having other film thickness, it is possible to appropriately change sensitivity, measurable range, and measurable target of the surface plasmon sensor.

The surface plasmon sensor of the present invention may be arranged so as to include: a metal layer on a dielectric substrate that is translucent with respect to a wavelength of a light beam from a light source, the metal layer contacting a liquid or gas including an object to be detected; and detection means for detecting the reflected light beam from the metal layer with respect to each of a plurality of incident angles, refractive index of the liquid or gas being detected by radiating the light beam from the light source onto a surface of the metal layer which surface is opposite to a surface where the liquid or gas contacts, the surface plasmon sensor **characterized in that** the metal layer includes a first metal film and a second metal film that are positioned on the dielectric substrate in such a manner that the first metal film and the second metal film are close to each other, and the first metal film and the second metal film are made of different materials.

Further, the surface plasmon sensor of the present invention detects refractive index of the liquid or gas including an object to be detected, and is preferably used for measurement of concentration of the liquid or the gas, detection of protein, macromolecule etc. and other purposes.

The present invention is not limited to the description of the embodiments above, but may be altered by a skilled person within the scope of the claims. An embodiment based on a proper combination of technical means disclosed in different embodiments is encompassed in the technical scope of the present invention.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Reference Signs List

1: surface plasmon sensor
2: light source
3: collimating lens
4: focusing lens
5: prism (dielectric substrate)
6: metal layer 6 (first metal film (metal film) 6a and a second metal film (metal film) 6b)
7: first lens
8: second lens
9: light detector
10: light source driving circuit
12: monitor
13: light beam
14: sample
15: micro flow path

## Claims

1. A surface plasmon sensor (1), comprising: a metal layer (6) on a dielectric substrate (5) that is translucent with respect to a wavelength of a light beam (13) from a light source (2), the metal layer (6) contacting a liquid or gas (14) including an object to be detected; and detection means (9) for detecting the reflected light beam (13) from the metal layer (6) with respect to each of a plurality of incident angles,
the surface plasmon sensor (1) **characterized in that**
the detection means (9) detects refractive index of the liquid or gas (14) that the metal layer (6) contacts, by radiating the light beam (13) from the light source (2) onto a surface of the metal layer (6) which surface is opposite to a surface where the liquid or gas (14) contacts,
the metal layer (6) includes a first metal film (6a) and a second metal film (6b) that are positioned on the dielectric substrate (5) in such a manner that the first metal film (6a) and the second metal film (6b) are close to each other, and
the first metal film (6a) and the second metal film (6b) are made of different materials.

2. The surface plasmon sensor (1) as set forth in claim 1, wherein the first metal film (6a) and the second metal film (6b) are positioned on the dielectric substrate (5) in such a manner that the first metal film (6a) and the second metal film (6b) are aligned while contacting each other, and the light beam (13) is radiated over the first metal film (6a) and the second metal film (6b).

3. The surface plasmon sensor (1) as set forth in claim 2, wherein an interface between the first metal film (6a) and the second metal film (6b) is parallel to a direction in which an incident angle of the light beam (13) changes most greatly.

4. The surface plasmon sensor (1) as set forth in any one of claims 1 to 3, wherein one of the first metal film (6a) and the second metal film (6b) is mainly made of gold.

5. The surface plasmon sensor (1) as set forth in claim 4, wherein the wavelength of the light beam (13) from the light source (2) is not less than 600nm and not more than 1550nm.

6. The surface plasmon sensor (1) as set forth in any one of claims 1 to 5, wherein a film thickness of the first metal film (6a) is a film thickness d that minimizes a minimum value of a reflectance of the light beam (13) with respect to the first metal film (6a), when the first metal film (6a) contacts the liquid or gas (14) without the object to be detected.

7. The surface plasmon sensor (1) as set forth in any one of claims 1 to 6, wherein a film thickness of the second metal film (6b) is a film thickness d that minimizes a minimum value of a reflectance of the light beam (13) with respect to the second metal film (6b), when the second metal film (6b) contacts the liquid or gas (14) without the object to be detected.

8. The surface plasmon sensor (1) as set forth in any one of claims 1 to 7, wherein the film thickness of the second metal film (6b) is equal to the film thickness of the first metal film (6a).

9. The surface plasmon sensor (1) as set forth in any one of claims 1 to 7, wherein the dielectric substrate (5) is detachable from the surface plasmon sensor (1).
